# FASCICULE DE BREVET EUROPEEN

(11) **EP 2 627 521 B1**
(45) Date de publication et mention de la délivrance du brevet: **16.09.2015**
(21) Numéro de dépôt: 11767269.1
(22) Date de dépôt: 11.10.2011
(51) Int. Cl.: B60C 9/14, B60C 13/00, B32B 25/08

(54) **PNEUMATIQUE DONT LES FLANCS SONT RENFORCÉS PAR UN FILM DE POLYMÈRE THERMOPLASTIQUE ÉTIRÉ MULTIAXIALEMENT**
REIFEN MIT SEITENWÄNDEN MIT EINER VERSTÄRKUNG AUS EINER MULTIAXIAL GEDEHNTEN THERMOPLASTISCHEN POLYMERFOLIE
TYRE, THE SIDEWALLS OF WHICH ARE REINFORCED WITH A FILM OF MULTIAXIALLY STRETCHED THERMOPLASTIC POLYMER

(30) Priorité: 14.10.2010 FR 1058365
(43) Date de publication de la demande: 21.08.2013
(73) Titulaire: Compagnie Générale des Etablissement Michelin-Michelin & Cie, 63000 Clermont-Ferrand (FR); Michelin Recherche et Technique S.A., 1763 Granges-Paccot (CH)
(72) Inventeur: LE CLERC, Christophe, F-63040 Clermont-Ferrand Cedex 9 (FR)
(74) Mandataire: Ribière, Joel
(86) Numéro de dépôt international: PCT/EP2011/067732
(87) Numéro de publication internationale: WO 2012/049177

(56) Documents cités:
- EP-A2- 2 123 480
- JP-A- 6 211 008
- JP-A- 10 035 231

## Description

### DOMAINE DE L'INVENTION

La présente invention est relative aux pneumatiques pour véhicules et à leur renforcement. Elle se rapporte plus particulièrement à l'utilisation de films de polymère et stratifiés multicouches dans les flancs de tels pneumatiques, notamment comme couches de protection contre les agressions diverses ou perforations.

### ETAT DE LA TECHNIQUE

De manière bien connue, un pneumatique pour véhicule comporte un sommet surmonté radialement à l'extérieur d'une bande de roulement, deux bourrelets destinés à coopérer avec une jante de montage, deux flancs souples, chaque flanc reliant un bourrelet au sommet, une armature de carcasse ancrée dans chacun des bourrelets et s'étendant dans les flancs et dans le sommet, une armature de sommet rigide (ou ceinture) s'étendant dans le sommet circonférentiellement et situé radialement entre l'armature de carcasse et la bande de roulement, ce pneumatique délimitant avec la jante de montage une cavité dans laquelle s'exerce usuellement la pression de gonflage.

Chaque paroi latérale du pneu située entre le sommet et le bourrelet est communément appelée flanc. Chaque flanc est basiquement constitué d'au moins l'armature de carcasse ci-dessus, renforcée par des fils de renforcement textiles ou métalliques (orientés radialement dans le cas d'une carcasse dite radiale), cette armature étant entourée d'une couche de flanc externe (par rapport à l'armature de carcasse) dite aussi "partie externe du flanc" (portion du flanc qui est visible de l'extérieur une fois le pneu monté sur sa jante) et d'une couche de flanc interne (par rapport à l'armature de carcasse) dite aussi "partie interne du flanc" (portion du flanc du côté de la cavité, c'est-à-dire non visible de l'extérieur une fois le pneu monté sur sa jante), cette partie interne du flanc pouvant être formée simplement par la couche d'étanchéité (en anglais *"innerliner")* qui définit habituellement la face radialement interne d'un pneumatique.

Plusieurs autres couches de caoutchouc, renforcées ou non par des fils de renforcement, peuvent être ajoutées le cas échéant à cette structure de base pour renforcer ces flancs souples. En particulier, selon les besoins, ces flancs peuvent comporter une ou plusieurs nappes de protection, situées à l'extérieur par rapport à l'armature de carcasse, chargées de protéger le reste de la structure du flanc des agressions externes, chocs, déchirures ou autres perforations. C'est par exemple le cas dans les flancs de certains pneumatiques destinés à des roulages sur des sols relativement agressifs, par exemple sur des véhicules tourisme du type rallye ou encore sur des véhicules industriels hors la route du type chantier.

Ces nappes de protection doivent être suffisamment souples et déformables pour d'une part épouser au mieux la forme de l'obstacle sur lequel le flanc est susceptible de s'appuyer lors du roulage, et d'autre part s'opposer à la pénétration éventuelle de corps étrangers à l'intérieur de celui-ci. La satisfaction de tels critères nécessite généralement l'utilisation dans ces nappes ou couches de protection de fils de renforcement sous forme de câbles élastiques à torons métalliques combinant une haute élasticité et une énergie à la rupture élevée.

De telles nappes de protection métalliques pour flancs de pneumatiques sont bien connues, elles ont été décrites par exemple dans les brevets ou demandes de brevet FR 1 502 689 (ou US 3 464 477), EP 1 270 273 (ou US 2003/0005993).

Elles présentent toutefois un certain nombre d'inconvénients. Outre le fait qu'elles alourdissent de manière conséquente les flancs des pneumatiques, elles sont constituées de câbles à torons qui sont relativement coûteux, ceci à double titre : d'une part, ces derniers sont préparés en deux étapes, à savoir par fabrication préalable des torons puis assemblage par retordage de ces torons ; d'autre part, ils nécessitent généralement une torsion élevée de leurs fils (soit des pas d'hélice très courts), torsion certes indispensable pour leur conférer l'élasticité souhaitée mais impliquant des vitesses de fabrication réduites. Cet inconvénient se répercute bien entendu sur le coût des pneumatiques eux-mêmes.

D'autres inconvénients connus de ces câbles métalliques sont leur sensibilité à la corrosion, leur poids et leur encombrement (diamètre externe) relativement important.

### BREVE DESCRIPTION DE L'INVENTION

Poursuivant leurs recherches, les Demanderesses ont trouvé un matériau léger et performant qui permet notamment de remplacer ces nappes conventionnelles renforcées de câbles d'acier élastiques et donc de pallier les inconvénients précités.

Ainsi, selon un premier objet, la présente invention concerne un pneumatique, selon la revendication 1, comportant un sommet surmonté d'une bande de roulement, deux flancs, deux bourrelets, chaque flanc reliant chaque bourrelet au sommet, une armature de carcasse ancrée dans chacun des bourrelets et s'étendant dans les flancs et dans le sommet, une ceinture s'étendant dans le sommet circonférentiellement et situé radialement entre l'armature de carcasse et la bande de roulement, ce pneumatique étant caractérisé en ce qu'au moins un de ses flancs est renforcé par un film de polymère thermoplastique étiré multiaxialement, disposé entre et au contact de deux couches de composition de caoutchouc, et situé à l'extérieur par rapport à l'armature de carcasse.

Ainsi disposé, entre et au contact de deux couches de composition de caoutchouc, le film de polymère thermoplastique ci-dessus constitue avec ces deux couches adjacentes un stratifié multicouches qui possède une structure souple et hautement déformable, structure qui s'est révélée présenter, de manière inattendue, une résistance élevée aux efforts de perforation, équivalente à celle des tissus conventionnels renforcés par exemple de câbles métalliques, malgré une épaisseur nettement inférieure.

Grâce notamment à son épaisseur réduite, ce stratifié présente en outre l'avantage d'être faiblement hystérétique comparativement aux tissus ou nappes de protection conventionnels. Or, un objectif majeur des manufacturiers de pneumatiques est justement d'abaisser l'hystérèse de leurs constituants pour réduire la résistance au roulement de ces pneumatiques.

Les pneumatiques de l'invention peuvent être destinés à des véhicules à moteur du type tourisme, 4x4, "SUV" (Sport Utility Vehicles), mais également à des véhicules deux-roues tels que motos ou vélos, ou à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules de transport ou de manutention.

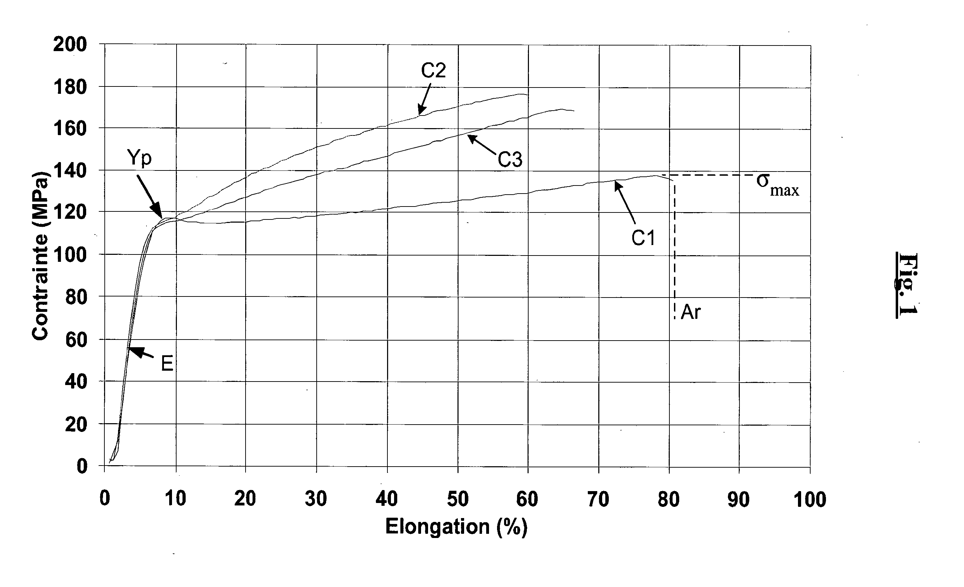

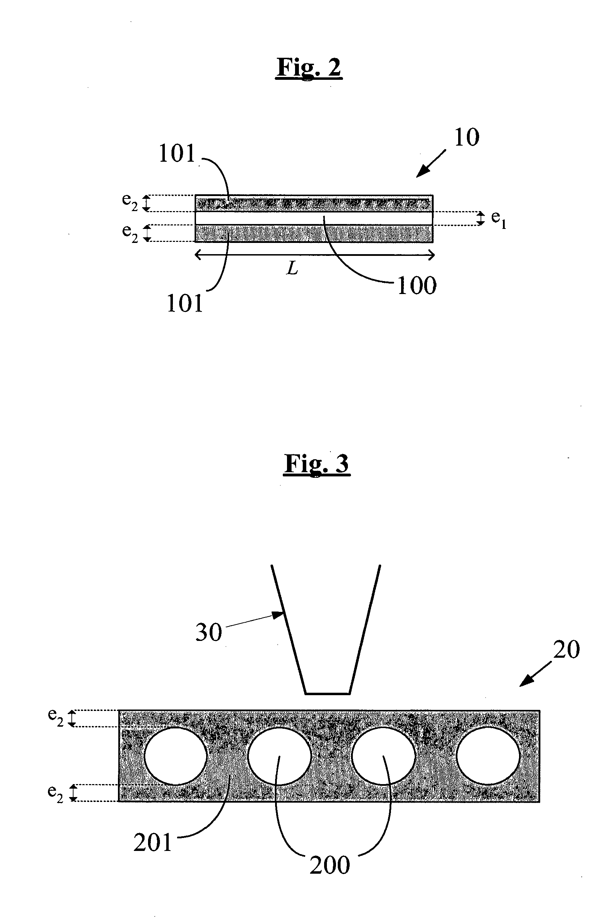

L'invention ainsi que ses avantages seront aisément compris à la lumière de la description détaillée et des exemples de réalisation qui suivent, ainsi que des figures 1 à 3 relatives à ces exemples qui schématisent (sauf indication contraire, sans respect d'une échelle spécifique) :
- des courbes contrainte-élongation enregistrées, selon trois directions de traction, sur un film de polymère thermoplastique (PET) orienté multiaxialement, utilisable dans le pneumatique de l'invention (Fig. 1) ;
- en coupe transversale, un film de polymère thermoplastique et un stratifié multicouches utilisables conformément à l'invention (Fig. 2) ;
- en coupe transversale, une nappe conventionnelle de protection comportant des câbles métalliques à haute élongation (Fig. 3).

### DEFINITIONS

Dans la présente demande, on entend par :
- "axiale", une direction parallèle à l'axe de rotation du pneumatique ; cette direction peut être "axialement intérieure" lorsqu'elle est dirigée vers l'intérieur du pneumatique et "axialement extérieure" lorsqu'elle est dirigée vers l'extérieur du pneumatique ;
- "bourrelet", la portion relativement inextensible du pneumatique adjacente radialement intérieurement au flanc et dont la base est destinée à être montée sur un siège de jante d'une roue de véhicule ;
- "caoutchouc" ou "élastomère" (les deux termes étant considérés comme synonymes) : tout type d'élastomère, diénique ou non diénique par exemple thermoplastique ;
- "caoutchouc diénique" : tout élastomère (élastomère seul ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non ;
- "couche" : une bande ou tout autre élément tridimensionnel d'épaisseur relativement faible par rapport à ses autres dimensions, dont le rapport de l'épaisseur sur la plus grande des autres dimensions est inférieur à 0,5, de préférence inférieur à 0,1 ;
- "flanc", la portion du pneumatique, le plus souvent de faible rigidité de flexion, située entre le sommet et le bourrelet ;
- "feuille" ou "film" toute couche fine, dont le rapport de l'épaisseur sur la plus petite des autres dimensions est inférieur à 0,1 ;
- "fil de renforcement" (en anglais *"reinforcing thread"*): tout brin long et fin, tout filament élémentaire, toute fibre multifilamentaire ou tout assemblage de tels filaments ou fibres tels que des retors ou des câbles, de grande longueur relativement à sa section transversale, susceptible de renforcer les propriétés en extension d'une matrice de caoutchouc, ce fil pouvant être rectiligne comme non rectiligne, par exemple torsadé, ou ondulé ;
- "pce" (en anglais *"phr"*), parties en poids pour cent parties d'élastomère ou caoutchouc ;
- "radiale", une direction passant par l'axe de rotation du pneumatique et normale à celui-ci ; cette direction peut être "radialement intérieure (ou interne)" ou "radialement extérieure (ou externe)" selon qu'elle se dirige vers l'axe de rotation du pneumatique ou vers l'extérieur du pneumatique ;
- "stratifié" ou "stratifié multicouches" : au sens de la classification internationale des brevets, tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage.

D'autre part, sauf indication expresse différente, tous les pourcentages (%) indiqués sont des % en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans la présente demande, par définition, un élément A est dit "interne" ou "situé à l'intérieur" par rapport à l'armature de carcasse s'il est disposé, par rapport à cette dernière, du côté de la cavité de gonflage du pneumatique. Inversement, un élément B est dit "externe" ou "situé à l'extérieur" par rapport à l'armature de carcasse s'il est disposé, par rapport à cette dernière, de l'autre côté.

### DESCRIPTION DETAILLEE DE L'INVENTION

Le pneu de l'invention a donc pour caractéristique essentielle qu'au moins un de ses flancs (c'est-à-dire un seul flanc ou les deux) est renforcé par un film de polymère thermoplastique étiré multiaxialement, ce film étant disposé entre et au contact de deux couches de composition de caoutchouc, formant ainsi un ensemble qualifié dans la présente demande de « stratifié multicouches » ; ces film, couches et stratifié sont décrits en détail ci-après.

Tout film de polymère thermoplastique étiré multiaxialement dans son plan, c'est-à-dire étiré, orienté dans plus d'une direction dans le plan du film, est utilisable. De tels films étirés multiaxialement sont bien connus, utilisés essentiellement à ce jour dans l'industrie de l'emballage ("*packaging"*), de l'alimentaire, dans le domaine électrique ou encore en tant que support de revêtements magnétiques.

Ils sont préparés selon diverses techniques d'étirage bien connues, toutes destinées à conférer au film des propriétés mécaniques élevées dans plusieurs directions principales, et non pas dans une seule direction comme c'est le cas pour des films ou fibres conventionnels en polymère thermoplastique (par exemple PET ou nylon) qui sont de manière connue étirés monoaxialement (dans une seule direction) lors de leur filage au fondu ou de leur extrusion. De tels films conventionnels étirés monoaxialement et qui par conséquent ne disposent pas de hautes propriétés mécaniques quelle que soit la direction de traction considérée, et notamment leur application comme couches d'étanchéité ou de rigidification dans des pneumatiques, ont par exemple été décrits dans les demandes de brevet JP 6-211008, JP 10-035231, EP 2 123 480 (ou US 2009/283194).

De telles techniques font appel à des étirages multiples dans plusieurs directions, étirages longitudinaux, transversaux, étirages planaires dans le plan du film. A titre d'exemple, on peut notamment citer la technique de bi-étirage par soufflage. Les étirages peuvent être réalisés en une ou plusieurs fois, les étirages lorsqu'ils sont plusieurs pouvant être simultanés ou séquencés. Le ou les taux d'étirage appliqués, généralement supérieurs à 2, sont fonction des propriétés mécaniques finales visées.

Des films de polymère thermoplastique étirés multiaxialement ainsi que leur procédés d'obtention ont été décrits dans de nombreux documents brevets, par exemple dans les documents FR 2539349 (ou GB 2134442), DE 3621205, EP 229346 (ou US 4876137), EP 279611 (ou US 4867937), EP 539302 (ou US 5409657) et WO 2005/011978 (ou US 2007/0031691).

Le film de polymère thermoplastique utilisé présente, quelle que soit la direction de traction considérée (dans le plan du film), un module en extension (ou module élastique) noté E qui est supérieur à 1000 MPa (notamment entre 1000 et 4000 MPa), plus préférentiellement encore supérieur à 2000 MPa. Des valeurs de module E comprises entre 2000 et 4000 MPa, en particulier entre 3000 et 4000 MPa, sont particulièrement souhaitables.

Selon l'invention, quelle que soit la direction de traction considérée (dans le plan du film), la contrainte maximale en traction notée σₘₐₓ du film de polymère thermoplastique est supérieure à 80 MPa (notamment entre 80 et 200 MPa), plus préférentiellement supérieure à 100 MPa (notamment entre 100 et 200 MPa). Des valeurs de contrainte σₘₐₓ supérieures à 150 MPa, en particulier comprises entre 150 et 200 MPa, sont particulièrement souhaitables.

Selon un autre mode préférentiel, quelle que soit la direction de traction considérée (dans le plan du film), le seuil de déformation plastique noté Yp (connu aussi sous le terme anglais de *"Yield point")* du film de polymère thermoplastique est situé au-delà de 3% d'allongement, notamment entre 3 et 15%. Des valeurs Yp au-delà de 4%, en particulier comprises entre 4 et 12%, sont particulièrement souhaitables.

Selon un autre mode préférentiel, quelle que soit la direction de traction considérée (dans le plan du film), le film de polymère thermoplastique présente un allongement à la rupture noté Ar qui est supérieur à 40% (notamment entre 40 et 200%), plus préférentiellement supérieur à 50%. Des valeurs Ar comprises entre 50 et 200% sont particulièrement souhaitables.

Les propriétés mécaniques énoncées ci-dessus sont bien connues de l'homme du métier, elles se déduisent des courbes force-allongement mesurées par exemple selon la norme ASTM D638-02 pour des bandes d'épaisseur supérieure à 1 mm, ou encore selon la norme ASTM D882-09 pour des feuilles fines ou films dont l'épaisseur est au plus égale à 1 mm ; les valeurs de module E et de contrainte σₘₐₓ ci-dessus, exprimées en MPa, sont calculées par rapport à la section initiale de l'éprouvette tractionnée.

Le film de polymère thermoplastique utilisé est de préférence du type stabilisé thermiquement, c'est-à-dire qu'il a subi, après étirage, un ou plusieurs traitements thermiques destinés de manière connue à limiter sa contraction (ou retrait) thermique à haute température ; de tels traitements thermiques peuvent consister notamment en des recuits, des trempes ou des combinaisons de tels recuits ou trempes.

Ainsi, et de préférence, le film de polymère thermoplastique utilisé présente, après 30 min à 150°C, une contraction relative de sa longueur qui est inférieure à 5%, de préférence inférieure à 3% (mesurée sauf précisions différentes selon ASTM D1204-08).

La température de fusion du polymère thermoplastique utilisé est préférentiellement choisie supérieure à 100°C, plus préférentiellement supérieure à 150°C, en particulier supérieure à 200°C.

Le polymère thermoplastique est choisi préférentiellement dans le groupe constitué par les polyamides, les polyesters et les polyimides, plus particulièrement dans le groupe constitué par les polyamides et les polyesters. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate).

Le polymère thermoplastique est préférentiellement un polyester, plus préférentiellement un PET ou PEN.

Des exemples de films de polymère thermoplastique PET étirés multiaxialement, convenant à l'invention, sont par exemple les films de PET bi-étirés commercialisés sous les dénominations "Mylar" et "Melinex" (société DuPont Teijin Films), ou encore "Hostaphan" (société Mitsubishi Polyester Film).

Dans le stratifié multicouches du pneu selon l'invention, l'épaisseur e₁ du film de polymère thermoplastique est de préférence comprise entre 0,05 et 1 mm, plus préférentiellement entre 0,1 et 0,7 mm. Par exemple, des épaisseurs de film de 0,20 à 0,60 mm se sont révélées tout à fait convenir.

Le film de polymère thermoplastique peut comporter des additifs ajoutés au polymère, notamment au moment de la mise en forme de ce dernier, ces additifs pouvant être par exemple des agents de protection contre le vieillissement, des plastifiants, des charges telles que silice, argiles, talc, kaolin ou encore fibres courtes ; des charges peuvent par exemple être utilisées pour rendre la surface du film rugueuse et contribuer ainsi à améliorer sa prise de colle et/ou son adhésion aux couches de caoutchouc avec lesquelles il est destiné à être au contact.

Chacune des deux couches de composition de caoutchouc, ci-après "couche de caoutchouc", constitutive du stratifié multicouches, est à base d'au moins un élastomère ou caoutchouc.

De préférence, ce caoutchouc est un caoutchouc diénique, plus préférentiellement choisi dans le groupe constitué par les polybutadiènes (BR), le caoutchouc naturel (NR), les polyisoprènes de synthèse (IR), les copolymères de butadiène ou les copolymères d'isoprène tels que par exemple les copolymères styrène-butadiène (SBR), isoprène-butadiène (BIR), isoprène-styrène (SIR), isoprène-butadiène-styrène (SBIR), isoprène-isobutylène (IIR ou caoutchouc butyl), les copolymères de diènes et d'alpha-oléfines tels que par exemple des caoutchoucs EPDM, et les mélanges de ces élastomères.

Selon un mode de réalisation particulier et préférentiel, chaque couche de caoutchouc comporte 50 à 100 pce d'un élastomère diénique choisi dans le groupe constitué par le caoutchouc naturel (NR), les polybutadiènes (BR), les caoutchoucs butyl (IIR), les caoutchoucs EPDM et les mélanges de tels élastomères.

La composition de caoutchouc ci-dessus peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents antivieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute Tg supérieure à 30°C, des agents facilitant la mise en oeuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple des sels de cobalt, de nickel ou de lanthanide, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone ou de la silice, est de préférence supérieur à 50 pce, notamment compris entre 50 et 150 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m²/g, de préférence de 30 à 400 m²/g.

L'homme de l'art saura, à la lumière de la présente description, ajuster la formulation de chaque couche de caoutchouc afin d'atteindre les niveaux de propriétés (notamment module d'élasticité) souhaités, et adapter cette formulation à l'application spécifique envisagée.

De préférence, chaque couche de caoutchouc présente, à l'état réticulé, un module sécant en extension, à 10% d'allongement, qui est compris entre 4 et 25 MPa, plus préférentiellement entre 4 et 20 MPa. Les mesures de module sont effectuées en traction, sauf indication différente selon la norme ASTM D412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Dans le stratifié multicouches du pneumatique selon l'invention, l'épaisseur e₂ de chaque couche de caoutchouc est de préférence comprise entre 0,05 et 2 mm, plus préférentiellement entre 0,1 et 1 mm.

Le film de polymère thermoplastique peut être utilisé tel quel, c'est-à-dire tel que disponible commercialement, ou bien re-découpé à façon sous forme de bandes ou bandelettes étroites dont la largeur et la longueur peuvent varier dans une très large mesure selon les applications visées. De préférence, dans le pneu de l'invention, le film de polymère thermoplastique présente une largeur et une longueur qui sont respectivement supérieures à 2 mm et à 2 cm, préférentiellement respectivement supérieures à 4 mm et à 4 cm.

Selon un mode de réalisation préférentiel, le film de polymère thermoplastique est pourvu d'une couche adhésive au regard de chaque couche de caoutchouc avec laquelle il est au contact.

Pour faire adhérer le caoutchouc au film de polymère thermoplastique, on pourra utiliser tout système adhésif approprié, par exemple une simple colle textile du type "RFL" (résorcinol-formaldéhyde-latex) comportant au moins un élastomère diénique tel que du caoutchouc naturel, ou toute colle équivalente connue pour conférer une adhésion satisfaisante entre du caoutchouc et des fibres thermoplastiques conventionnelles telles que des fibres en polyester ou en polyamide.

A titre d'exemple, le procédé d'encollage peut comporter essentiellement les étapes successives suivantes : passage dans un bain de colle, suivi d'un essorage (par exemple par soufflage, calibrage) pour éliminer l'excès de colle ; puis séchage par exemple par passage dans un four (par exemple pendant 30 s à 180°C) et enfin traitement thermique (par exemple pendant 30 s à 230°C).

Avant l'encollage ci-dessus, il peut être avantageux d'activer la surface du film, par exemple par voie mécanique et/ou physique et/ou chimique, pour améliorer sa prise de colle et/ou son adhésion finale au caoutchouc. Un traitement mécanique pourra consister par exemple en une étape préalable de matage ou de rayage de la surface ; un traitement physique pourra consister par exemple en un traitement par un rayonnement tel qu'un faisceau d'électrons ; un traitement chimique pourra par exemple consister en un passage préalable dans un bain de résine époxy et/ou composé isocyanate.

La surface du film de polymère thermoplastique étant en règle générale particulièrement lisse, il peut être également avantageux d'ajouter un épaississant à la colle utilisée, afin d'améliorer la prise totale de colle par le film, lors de son encollage.

L'homme du métier comprendra aisément que, dans le stratifié multicouches précédemment décrit, la connexion entre le film de polymère thermoplastique et chaque couche de caoutchouc avec laquelle il est au contact est assurée définitivement lors de la cuisson (réticulation) finale du pneumatique de l'invention.

La figure 1 reproduit les courbes contrainte-élongation enregistrées sur un film de PET bi-étiré ("Mylar A" de la société DuPont Teijin Films, d'épaisseur 0,35 mm) qui est utilisable dans les flancs des pneumatiques conformes à l'invention.

Les courbes notées C1, C2 et C3 correspondent à une traction conduite, respectivement, selon l'orientation principale du film correspondant à la direction d'extrusion (connue aussi sous le nom de direction "MD" pour "*Machine Direction"*), selon une orientation normale à la direction MD (connue sous le nom de direction "TD" pour "*Transversale Direction"*), et enfin selon une direction oblique (angle de 45°) par rapport aux deux directions précédentes (MD et TD). De ces courbes de traction peuvent être déduites, de manière bien connue de l'homme du métier, comme indiqué sur la figure 1, les propriétés mécaniques telles que module en extension (E), contrainte maximale en traction (σₘₐₓ), seuil de déformation plastique Yp (ou *"Yield point*") et allongement à la rupture (Ar).

Ces courbes de traction ont été enregistrées et les propriétés mécaniques mesurées sauf indication différente selon la norme ASTM D882-09, sur des éprouvettes de films sous forme d'haltères de 4 mm de large et 30 mm de long (partie utile tractionnée), et d'épaisseur e₁ égale à celle du film de polymère thermoplastique testé, tractionnées à une vitesse de 200 mm/min.

A la lecture de la figure 1, on constate notamment que le film de polymère thermoplastique étiré multiaxialement a, ce qui correspond à un autre mode de réalisation préférentiel de l'invention, quelle que soit la direction de traction considérée, les propriétés mécaniques suivantes (déduites des courbes contrainte-élongation de la figure 1) :
- un module en extension E supérieur à 500 MPa ;
- une contrainte maximale en traction σₘₐₓ supérieure à 100 MPa ;
- un seuil de déformation plastique Yp compris entre 5 et 10% ;
- un allongement à la rupture noté Ar supérieur à 50%.

A titre d'exemple particulier, le stratifié multicouches 10 tel qu'illustré à la figure 2 est constitué d'un film 100 de PET bi-étiré, d'épaisseur e₁ par exemple égale à environ 0,35 mm, disposé "en sandwich" entre deux couches 101 de composition de caoutchouc d'épaisseur e₂ par exemple égale à environ 0,4 mm, le stratifié ayant donc une épaisseur totale (e₁+2e₂) par exemple d'environ 1,15 mm. La composition de caoutchouc ici utilisée est une composition conventionnelle pour pneumatique, typiquement à base de caoutchouc naturel, de noir de carbone, d'un système de vulcanisation et des additifs usuels. L'adhésion entre le film de PET et chaque couche de caoutchouc est assurée par une colle RFL qui a été déposée de manière connue, comme indiqué précédemment.

Comme déjà indiqué, le pneumatique de l'invention a pour caractéristique essentielle que la structure interne (c'est-à-dire l'intérieur) d'au moins un de ses flancs est renforcée par un film de polymère thermoplastique, étiré multiaxialement dans son plan, qui est situé à l'extérieur par rapport à l'armature de carcasse et la cavité de gonflage du pneumatique. Mais l'invention s'applique également au cas où deux films de polymère thermoplastique étiré multiaxialement sont utilisés dans au moins un de ses flancs, un film situé à l'extérieur et l'autre film situé à l'intérieur par rapport à l'armature de carcasse et la cavité.

Le film de polymère thermoplastique, et le stratifié multicouches qu'il forme avec ses deux couches de caoutchouc adjacentes, peut s'étendre essentiellement sur toute la longueur de flanc située entre la bande de roulement et le bourrelet, ou sur une portion seulement du flanc, par exemple sur environ la moitié de la hauteur de la section du pneumatique et dont le milieu se trouve sensiblement à mi-flanc.

Les deux couches de caoutchouc disposées, dans le flanc, de part et d'autre du film de polymère thermoplastique peuvent être par exemple simplement constituées d'un côté (à l'extérieur) par la partie externe usuelle du flanc, de l'autre côté (à l'intérieur) par la couche de caoutchouc (ou couche de calandrage) enrobant habituellement les fils de renforcement de l'armature de carcasse, telles qu'elles sont décrites en introduction du présent mémoire. Mais l'une au moins de ces deux couches de caoutchouc (voire les deux) pourrait également être constituée par une couche de caoutchouc additionnelle de formulation différente.

La qualité du renforcement apporté aux flancs d'un pneumatique par le film de polymère thermoplastique et le stratifié multicouches décrits précédemment peut être appréciée par un test dit de perforation consistant à mesurer la résistance à la perforation par un indenteur donné. Le principe de ce test est bien connu, décrit par exemple dans la norme ASTM F1306-90.

Lors de tests de perforation comparatifs, on a testé :
- d'une part, un stratifié multicouches (10) comportant le film bi-étiré (100) décrit précédemment, d'épaisseur e₁ simplement disposé entre deux couches de caoutchouc (101) d'épaisseur e₂, comme illustré à la figure 2 ;
- d'autre part, pour comparaison, un tissu métallique conventionnel comportant une série de câbles multitorons en acier (200) disposés parallèlement entre eux, dans un plan, selon un pas de pose d'environ 2,5 mm, cette série de câbles étant enrobée dans du caoutchouc (201), comme illustré à la figure 3 ; l'épaisseur de caoutchouc au dos des câbles est ici égale à e₂ soit environ 0,4 mm.

Ces câbles multitorons (200) de construction dite "6 x 0,35" ou "3 x 2 x 0,35" sont des câbles constitués chacun de 3 torons (torons non représentés à la figure 3, pour simplification) de 2 fils de diamètre 0,35 mm, assemblés entre eux par câblage, pour former des câbles métalliques élastiques (i.e., à haute élongation ou HE) connus pour renforcer des pneumatiques. Le diamètre total (ou diamètre d'encombrement) de ces câbles est de 1,4 mm environ, si bien que le tissu métallique final a une épaisseur totale d'environ 2,2 mm.

Les figures 2 et 3 ont été représentées sensiblement à la même échelle (échelle 1) pour illustrer la différence notable d'épaisseur existant entre le stratifié multicouches utilisé conformément à l'invention (10) et le tissu métallique conventionnel (20).

Dans le stratifié multicouches du pneu de l'invention, la largeur "*L*" du film (100) est de préférence identique à la largeur des deux couches de caoutchouc (101) entre lesquelles il est disposé, comme schématisé à la figure 2. Mais l'invention s'applique également aux cas où cette largeur L est différente, inférieure ou supérieure ; par exemple, le film de polymère thermoplastique, dans ce stratifié multicouches, pourrait être constitué d'une pluralité de bandes ou bandelettes plus étroites, par exemple juxtaposées ou partiellement superposées, et orientées selon une direction principale identique ou différente de celle des deux couches de caoutchouc.

L'indenteur métallique utilisé (illustré à la figure 3 sous la référence 30) était de forme cylindrique (diamètre 4,5 ± 0,05 mm), conique à son extrémité (angle de 30° ± 2) et tronqué à un diamètre de 1 mm. L'échantillon de composite testé (stratifié multicouches ou tissu métallique témoin) a été fixé sur un support métallique d'épaisseur 18 mm qui était percé, à l'aplomb de l'indenteur, d'un trou de diamètre 12,7 mm pour permettre le passage libre de l'indenteur à travers l'échantillon perforé et sa plaque support.

Puis, pour caractériser la résistance à la perforation, on a enregistré la courbe force-déplacement de l'indenteur ci-dessus (équipé de capteurs reliés à la machine de traction), traversant l'échantillon à une vitesse de 10 cm/min.

Le tableau ci-dessous donne le détail des mesures enregistrées, la base 100 étant retenue pour le composite témoin : le module de fléchissement représente la pente initiale de la courbe force-déplacement ; la force à la perforation est la force maximale enregistrée avant perforation de l'échantillon par la pointe de l'indenteur ; l'allongement à la perforation est l'allongement relatif enregistré au moment de la perforation.

**Tableau**

| Composite testé : | épaisseur (mm) | Module de fléchissement | Force à la perforation | Allongement à la perforation |
|---|---|---|---|---|
| Témoin | 2,20 | 100 | 100 | 100 |
| Invention | 1,15 | 93 | 92 | 103 |

A la lecture du tableau ci-dessus, on constate que le stratifié multicouches destiné aux flancs du pneu selon l'invention présente de manière surprenante, malgré d'une part une épaisseur pratiquement réduite de moitié par rapport à la solution témoin et d'autre part l'absence de fils de renforcement, une résistance à la perforation quasiment équivalente à celle du tissu métallique habituel.

En conclusion, le film de polymère thermoplastique et le stratifié multicouches précédemment décrits sont aptes à conférer aux flancs des pneumatiques une haute résistance à la perforation, tout en combinant de nombreux avantages, notamment faible épaisseur, faible densité, faible coût et insensibilité à la corrosion, comparativement notamment à des tissus métalliques conventionnels tels que ceux utilisés comme couches de protection dans les flancs de ces pneumatiques.

## Revendications

1. Pneumatique comportant un sommet surmonté d'une bande de roulement, deux flancs, deux bourrelets, chaque flanc reliant chaque bourrelet au sommet, une armature de carcasse ancrée dans chacun des bourrelets et s'étendant dans les flancs et dans le sommet, une ceinture s'étendant dans le sommet circonférentiellement et situé radialement entre l'armature de carcasse et la bande de roulement, **caractérisé en ce qu'**au moins un de ses flancs est renforcé par un film (100) de polymère thermoplastique étiré multiaxialement, disposé entre et au contact de deux couches (101) de composition de caoutchouc, et situé à l'extérieur par rapport à l'armature de carcasse, et **en ce que** le film (100) de polymère thermoplastique présente, quelle que soit la direction de traction considérée, un module en extension (E) qui est supérieur à 1000 MPa et une contrainte maximale en traction (σₘₐₓ) qui est supérieure à 80 MPa.

2. Pneumatique selon la revendication 1, dans lequel le caoutchouc de chacune des deux couches (101) de composition est un caoutchouc diénique.

3. Pneumatique selon la revendication 2, dans lequel le caoutchouc diénique est choisi dans le groupe constitué par le caoutchouc naturel, les polyisoprènes de synthèse, les copolymères d'isoprène, les polybutadiènes, les copolymères de butadiène, les copolymères de diènes et d'alpha-oléfines, et les mélanges de tels élastomères.

4. Pneumatique selon la revendication 3, dans lequel chaque couche (101) de composition de caoutchouc comporte 50 à 100 pce d'un élastomère diénique choisi dans le groupe constitué par le caoutchouc naturel, les polybutadiènes, les caoutchoucs butyl, les caoutchoucs EPDM et les mélanges de tels élastomères.

5. Pneumatique selon l'une quelconque des revendications 1 à 4, dans lequel le film (100) de polymère thermoplastique présente, quelle que soit la direction de traction considérée, un module en extension (E) qui est compris entre 1000 et 4000 MPa.

6. Pneumatique selon l'une quelconque des revendications 1 à 5, dans lequel le film (100) de polymère thermoplastique présente, quelle que soit la direction de traction considérée, une contrainte maximale en traction (σₘₐₓ) qui est supérieure à 100 MPa.

7. Pneumatique selon l'une quelconque des revendications 1 à 6, dans lequel le film (100) de polymère thermoplastique présente, quelle que soit la direction de traction considérée, un allongement à la rupture (Ar) qui est supérieur à 40%.

8. Pneumatique selon l'une quelconque des revendications 1 à 7, dans lequel le film (100) de polymère thermoplastique est stabilisé thermiquement.

9. Pneumatique selon l'une quelconque des revendications 1 à 8, dans lequel le film (100) de polymère thermoplastique présente, après 30 min à 150°C, une contraction relative de longueur qui est inférieure à 5%.

10. Pneumatique selon l'une quelconque des revendications 1 à 9, dans lequel le polymère thermoplastique est un polyester.

11. Pneumatique selon la revendication 10, dans lequel le polyester est un polyéthylène téréphthalate ou un polyéthylène naphthalate.

12. Pneumatique selon l'une quelconque des revendications 1 à 11, dans lequel l'épaisseur (e₁) du film (100) de polymère thermoplastique est comprise entre 0,05 et 1 mm.

13. Pneumatique selon l'une quelconque des revendications 1 à 12, dans lequel l'épaisseur (e₂) de chaque couche de composition de caoutchouc est comprise entre 0,05 et 2 mm.

14. Pneumatique selon l'une quelconque des revendications 1 à 13, dans lequel la largeur et la longueur du film de polymère thermoplastique sont respectivement supérieures à 2 mm et à 2 cm.

15. Pneumatique selon l'une quelconque des revendications 1 à 14, dans lequel le film (100) de polymère thermoplastique est pourvu d'une couche adhésive au regard de chaque couche (101) de composition de caoutchouc.

## Patentansprüche

1. Reifen, umfassend einen Scheitel, überlagert durch eine Lauffläche, zwei Flanken, zwei Wülste, wobei jede Flanke jede Wulst mit dem Scheitel verbindet, eine Karkassenbewehrung, die in jeder der Wülste verankert ist und sich in die Flanken und in den Scheitel erstreckt, einen Gürtel, der sich in der Wulst umfänglich erstreckt und radial zwischen der Karkassenbewehrung und der Lauffläche angeordnet ist, **dadurch gekennzeichnet, dass** mindestens eine seiner Flanken durch eine multiaxial gestreckte Folie (100) aus thermoplastischem Polymer verstärkt ist, welche zwischen und in Kontakt mit zwei Schichten (101) aus Kautschukzusammensetzung angeordnet ist und sich bezüglich der Karkassenbewehrung auf der Außenseite befindet, und dass die Folie (100) aus thermoplastischem Polymer unabhängig von der betrachteten Zugrichtung einen Dehnmodul (E) von mehr als 1000 MPa und eine maximale Zugbelastung (σₘₐₓ) von mehr als 80 MPa aufweist.

2. Reifen nach Anspruch 1, wobei es sich bei dem Kautschuk jeder der beiden Zusammensetzungsschichten (101) um einen Dienkautschuk handelt.

3. Reifen nach Anspruch 2, wobei der Dienkautschuk aus der Gruppe bestehend aus Naturkautschuk, synthetischen Polyisoprenen, Isopren-Copolymeren, Polybutadienen, Butadien-Copolymeren, Copolymeren von Dienen und alpha-Olefinen und Mischungen derartiger Elastomere ausgewählt ist.

4. Reifen nach Anspruch 3, wobei jede Schicht (101) aus Kautschukzusammensetzung 50 bis 100 phe eines Dienelastomers aus der Gruppe bestehend aus Naturkautschuk, Polybutadienen, Butylkautschuken, EPDM-Kautschuken und Mischungen derartiger Elastomere umfasst.

5. Reifen nach einem der Ansprüche 1 bis 4, wobei die Folie (100) aus thermoplastischem Polymer unabhängig von der betrachteten Zugrichtung einen Dehnmodul (E) zwischen 1000 und 4000 MPa aufweist.

6. Reifen nach einem der Ansprüche 1 bis 5, wobei die Folie (100) aus thermoplastischem Polymer unabhängig von der betrachteten Zugrichtung eine maximale Zugbelastung (σₘₐₓ) von mehr als 100 MPa aufweist.

7. Reifen nach einem der Ansprüche 1 bis 6, wobei die Folie (100) aus thermoplastischem Polymer unabhängig von der betrachteten Zugrichtung eine Reißdehnung (Ar) von mehr als 40% aufweist.

8. Reifen nach einem der Ansprüche 1 bis 7, wobei die Folie (100) aus thermoplastischem Polymer thermisch stabilisiert ist.

9. Reifen nach einem der Ansprüche 1 bis 8, wobei die Folie (100) aus thermoplastischem Polymer nach 30 Minuten bei 150°C eine relative Längenkontraktion von weniger als 5% aufweist.

10. Reifen nach einem der Ansprüche 1 bis 9, wobei es sich bei dem thermoplastischen Polymer um einen Polyester handelt.

11. Reifen nach Anspruch 10, wobei es sich bei dem Polyester um ein Polyethylenterephthalat oder ein Polyethylennaphthalat handelt.

12. Reifen nach einem der Ansprüche 1 bis 11, wobei die Dicke (e₁) der Folie (100) aus thermoplastischem Polymer zwischen 0,05 und 1 mm liegt.

13. Reifen nach einem der Ansprüche 1 bis 12, wobei die Dicke (e₂) jeder Schicht aus Kautschukzusammensetzung zwischen 0,05 und 2 mm liegt.

14. Reifen nach einem der Ansprüche 1 bis 13, wobei die Breite und die Länge der Folie aus thermoplastischem Polymer mehr als 2 mm bzw. mehr als 2 cm betragen.

15. Reifen nach einem der Ansprüche 1 bis 14, wobei die Folie (100) aus thermoplastischem Polymer mit einer Klebstoffschicht, die jeder Schicht (101) aus Kautschukzusammensetzung zugewandt ist, versehen ist.

## Claims

1. Tyre comprising a crown surmounted by a tread, two sidewalls, two beads, each sidewall joining each bead to the crown, a carcass reinforcement anchored in each of the beads and extending into the sidewalls and into the crown, a belt extending into the crown circumferentially and located radially between the carcass reinforcement and the tread, **characterized in that** at least one of its sidewalls is reinforced by a multiaxially stretched thermoplastic polymer film (100), positioned between and in contact with two layers (101) of rubber composition, and located on the outside with respect to the carcass reinforcement, and **in that** the thermoplastic polymer film (100) has, irrespective of the tensile direction considered, a tensile modulus (E) which is greater than 1000 MPa and a maximum tensile stress (σₘₐₓ) which is greater than 80 MPa.

2. Tyre according to Claim 1, in which the rubber of each of the two layers (101) of composition is a diene rubber.

3. Tyre according to Claim 2, in which the diene rubber is selected from the group consisting of natural rubber, synthetic polyisoprenes, isoprene copolymers, polybutadienes, butadiene copolymers, copolymers of dienes and of α-olefins, and mixtures of such elastomers.

4. Tyre according to Claim 3, in which each layer (101) of rubber composition comprises from 50 to 100 phr of a diene elastomer selected from the group consisting of natural rubber, polybutadienes, butyl rubbers, EPDM rubbers and mixtures of such elastomers.

5. Tyre according to any one of Claims 1 to 4, in which the thermoplastic polymer film (100) has, irrespective of the tensile direction considered, a tensile modulus (E) which is between 1000 MPa and 4000 MPa.

6. Tyre according to any one of Claims 1 to 5, in which the thermoplastic polymer film (100) has, irrespective of the tensile direction considered, a maximum tensile stress (σₘₐₓ) which is greater than 100 MPa.

7. Tyre according to any one of Claims 1 to 6, in which the thermoplastic polymer film (100) has, irrespective of the tensile direction considered, an elongation at break (Ar) which is greater than 40%.

8. Tyre according to any one of Claims 1 to 7, in which the thermoplastic polymer film (100) is thermally stabilized.

9. Tyre according to any one of Claims 1 to 8, in which the thermoplastic polymer film (100) has, after 30 min at 150°C, a relative contraction in length which is less than 5%.

10. Tyre according to any one of Claims 1 to 9, in which the thermoplastic polymer is a polyester.

11. Tyre according to Claim 10, in which the polyester is a polyethylene terephthalate or a polyethylene naphthalate.

12. Tyre according to any one of Claims 1 to 11, in which the thickness (e₁) of the thermoplastic polymer film (100) is between 0.05 and 1 mm.

13. Tyre according to any one of Claims 1 to 14, in which the thickness (e₂) of each layer of rubber composition is between 0.05 and 2 mm.

14. Tyre according to any one of Claims 1 to 13, in which the width and the length of the thermoplastic polymer film are respectively greater than 2 mm and 2 cm.

15. Tyre according to any one of Claims 1 to 14, in which the thermoplastic polymer film (100) is provided with an adhesive layer facing each layer (101) of rubber composition.
